# EUROPEAN PATENT SPECIFICATION

(11) **EP 2 511 121 B1**
(45) Date of publication and mention of the grant of the patent: **24.10.2018**
(21) Application number: 11162262.7
(22) Date of filing: 13.04.2011
(51) Int. Cl.: B60K 28/00

(54) **Device and method for generating an indication signal to the driver of a vehicle**
Vorrichtung und Verfahren zur Erzeugung eines Anzeigesignals für einen Fahrzeugführer
Dispositif et procédé de génération d'un signal d'indication au conducteur d'un véhicule

(43) Date of publication of application: 17.10.2012
(73) Proprietor: Robert Bosch GmbH, 70442 Stuttgart (DE)
(72) Inventor:

(56) References cited:
- US-A1- 2005 209 749

## Description

### Field of the invention

Within the automotive domain there are various approaches to design collision warning systems which aim to help the driver in critical situations to take safe decisions and/or control the vehicle in order to avoid or mitigate crashes. The underlying technologies include capturing and analyzing images of the surrounding region of the vehicle to recognize possible obstacles and/or radar based technologies to measure the distance between the obstacle and the vehicle.

The present invention concerns a technology of comparing the visual attention of a driver of a vehicle and an image based location of a potential obstacle to the vehicle. The visual attention of the driver is estimated using a saliency map of the image from which the potential obstacle is also detected. The idea is that a driver should be warned especially in cases where a potential collision object is likely to be overlooked. The probability of missing obstacles correlates with the saliency of the object where highly salient objects are more likely to be detected than less salient objects. By taking into account the driver's visual attention warning systems can be optimised to increase effectiveness and driver acceptance.

### State of the Art

The publication document US 2005/209749 A1 shows a device and a method as shown in the preamble of the independent claims.

US Patent Application No. 2007/0206849 A1 discloses a technology, wherein an object detecting unit detects an object in an image captured in surrounding region of the vehicle, by applying a saliency calculation to the image, and a discriminating unit discriminates an object from among the other objects detected as a potential obstacle by applying a neural network method to the objects. Such a system gives a warning to the driver of the vehicle for all potential obstacles.

European Patent Application No. 2168815 A1 shows a system, in that an interior camera is used and detects the position of head and eyes of the driver and analyzes the looking behavior of the driver before giving any warning indication to the driver. Such a system, predicts that the driver of the vehicle would have already seen and perceived the situation and avoids unnecessary warning to the driver, until the critical situation has not arrived. Such a system reduces unnecessary warnings which would have been otherwise a distraction to the driver of the vehicle by using an additional interior camera.

### Disclosure of the Invention

The current invention relates to a driver warning device according to the subject-matter of claim 1.

The advantage of the present invention is that it gives optimized warning to the driver of the vehicle in contrast to the prior art. The warning strategies up to now is that the effective warning should be done at a relatively early moment, because the response time of the driver should also be considered along with other factors. The present invention is advantageous in that, partly not useful and unwanted warnings, because the driver having already perceived or recognized a situation are reduced. Also, such warnings might distract the attentiveness of the driver from the danger, than pointing to it, which the present invention advantageously reduces. The assumption is that potential obstacles (e.g. vulnerable road users) that are not conspicuous (or salient) in the driving scene are less likely to be recognized by the driver. For those hazards an enhanced and/or early warning is appropriate. On the other hand, highly salient hazards are likely to be recognized by the driver himself and should therefore be communicated in a less intrusive way. The current invention advantageously estimates the gaze behaviour (scan paths) of the driver and along with risk assessment information, which is integrated information about the driver's visual attention, potential obstacle, type of obstacle and other factors, gives an optimized reaction signal.

Another advantage of the current invention is that additional interior camera used to detect the gaze behaviour of the driver and as shown in the prior art is not used by the device of the current invention. The driver gaze behaviour is advantageously predicted by calculating a saliency map of the image captured by an exterior camera. The device of the current invention is cheaper and less complex because of reduced number of camera units and the number of wiring connections associated with such additional camera and is also very effective in giving optimum warning to the driver of the vehicle.

According to the current invention, the driver gaze behavior or the visual attention of the driver of the vehicle is based on the saliency map calculation means calculating the visual saliency map by measuring and arbitrarily combining several individual visual feature saliencies of said image. The visual saliency map of the image advantageously helps in determining, by how much a smallest unit or pixel of an image is different from its surrounding pixels, in many sub modalities and at many scales. The saliency map is a topographically arranged map or a 2 dimensional map, with the saliency encoded at every location in a visual input. The saliency map of an image is used to predict, if a unit or a group of units in the image will attract the attention of the driver of the vehicle. The image itself may be shot from a visual sensor mounted on the vehicle and capturing images in the immediate vicinity of the vehicle. The visual sensor itself may be a part of the driver warning system. The visual sensor can be a sensor capturing the images in real time and providing a continuous stream of image data to the saliency map calculation means. The visual sensor can also be a video sensor capturing video in the immediate vicinity of the vehicle. If the unit or the group of units in the image is highly salient, then it can be predicted that the attention of the driver is likely to be driven towards that unit.

In a further characteristic of the current invention, the saliency map calculation means measures the individual visual feature saliencies derived from individual image characteristics of the image. The image is defined by several characteristics for e.g. colour, contrast, brightness and frequency. From these individual image characteristics respective individual visual feature saliencies are advantageously derived. These individual visual feature saliencies define how the unit or the group of units of the image is different from other units in a respective individual image characteristic. A brightness visual feature saliency advantageously shows the variation of brightness of the unit or the group of units in the image from other units in the image. These individual visual feature saliencies are arbitrarily combined and measured to obtain the saliency map.

Another characteristic of the device of the current invention is advantageous in that the visual attention estimation means estimates the visual attention of the driver depending on a comparison of saliencies of each unit of said image in said saliency map. The visual attention estimation means compares each unit with other units in many sub-modalities using the saliency map and estimates the visual attention of the driver. The visual attention estimation means can advantageously employ an image processing algorithm in processing said saliency map of the image.

The comparison of saliencies by said visual attention estimation means using said saliency map results in identification of a unit and/or a group of units of said image with higher saliency than other units of said image. The identification shows the location of the unit and/or group of units in said image, which have higher saliency than other units.

The visual attention estimation means estimating the visual attention of the driver depending on said identified unit and/or group of units of said image with higher saliency than other units of said image. The unit and/or group of units with a higher saliency than the other units in the image are predicted to attract the attention of the driver. In this regard, the visual attention estimation unit predicts the visual attention of the driver of a vehicle towards a particular location or locations in the image where the corresponding unit and/group of unit is having a higher saliency in the saliency map.

In another embodiment of the invention, the risk assessment means estimating risk of collision of said vehicle with said at least one object, by a comparison of the location of said estimated visual attention of the driver and the location of said evaluated at least one object with conflicting trajectory with said vehicle in the said image. The risk assessment means, based on the location of the visual attention of the driver obtained from the visual attention estimation means and the location of a potential obstacle or a safety critical object, which is an object with a conflicting trajectory of movement with the vehicle and the location being obtained from an object evaluation means can advantageously measure if the two locations are matching with one another. Typically a safety critical object which has a lower saliency with respect to other units in the image would not attract the attention of the driver. In this case risk assessment means, calculates that the two said locations do not match. On the contrary, if the safety critical object is highly salient then the risk assessment means predicts that the visual attention of the driver would be towards such safety critical object. The risk assessment means depending on mentioned comparison and prediction on the location of visual attention and location of safety critical object in the image, does the risk estimation which represents a risk to the vehicle in collision with the safety critical object without the driver seeing or perceiving the safety critical object. The risk estimation represents a degree of risk of collision and may vary depending on the continuous stream of image data obtained from the visual sensor.

The risk assessment means is further characterized in said risk estimation resulting in an indication signal to said driver warning means. The risk assessment means advantageously evaluates the location of the visual attention of the driver and the location of the safety critical object in the image for a fixed time for e.g. a pre-defined amount of time. If the location of the visual attention of the driver still does not match with the location of the safety critical object, then the risk assessment means generates the indication signal to the driver warning means. The generation of the indication signal may also depend on the degree of the risk estimation, estimated by the risk assessment means. A predefined risk estimation threshold can be set and the real time risk estimation estimated by the risk assessment means can be compared against the threshold before generating the indication signal.

The indication signal generated by the risk assessment means is characterized in different intensity levels depending on the risk estimation done by the risk assessment means. The driver warning means advantageously reacts according to the intensity of the indication signal.

The current invention also shows a method to warn a driver of a vehicle, showing a method to evaluate a conflicting trajectory of movement of said vehicle with at least one object detected in an image, and comprising the steps, calculating a visual saliency map of said image, estimating a visual attention of the driver of said vehicle depending on said calculated visual saliency map, estimating a risk of collision of said vehicle with said at least one object detected in said image, based on said estimation of visual attention and said method to evaluate the conflicting trajectory of movement of said vehicle with said at least one object detected in said image and warning the driver of said vehicle based on said estimation of the risk of collision.

Further characteristics, applications and advantages of the invention arise from the following description of embodiments of the invention which are represented in the figures of the drawing. Beside, all described or represented characteristics either for its own or in arbitrary combination form the subject of the invention independent from their combination in the claims or the reference of the claims and independently from their formulation or representation in the description or in the drawings.

### Short Description of the Drawings

In the following, examples of the invention are explained on the basis of drawings. The drawings are,
- Fig 1: shows a driver warning system of the current invention,
- Fig 2: shows a saliency calculation means of the current invention,
- Fig 3: shows an example of the current invention with two safety critical objects,
- Fig 4: shows another example of the current invention with one safety critical object.

### Description of Embodiments

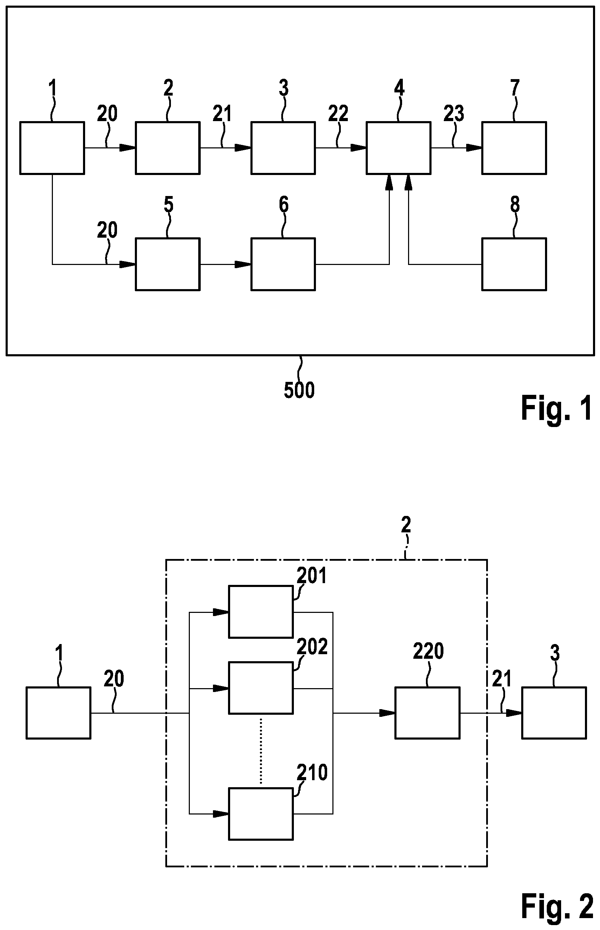

Figure 1 shows an image based driver warning device 500 adapted in a vehicle. An image capturing sensor 1, which can be a video sensor or a camera, captures images of the surroundings in the immediate vicinity of the vehicle, especially in front of the vehicle. The image capturing sensor 1 captures images in consecutive time intervals. An image data 20 consisting of at least one image, obtained from the image capturing sensor 1 is then fed into a saliency map calculation means 2 and an object detection unit 5. The saliency calculation means calculates a saliency map 21 of the image data 20, wherein the saliency map 21 is normalized saliency information of each unit of the image data 20. The saliency calculation means calculates the saliency map 21 of the image data 20, depending on different visual features of the image data 20. The different visual features are for e.g. colour, brightness, contrast and other visual features of the image data 20 which are not mentioned here, based on which, the saliency map 21 is calculated by the saliency map calculation means 2. The saliency map 21 calculated by the saliency map calculation means 2, is a visual saliency information by which, a smallest unit of the image data 20 is distinguished from its surroundings, in many sub-modalities and at many scales. A visual attention estimator unit 3 gets the saliency map 21 from the saliency map calculation means 2 and estimates visual attention 22 of a driver of the vehicle. The visual attention estimator 3 uses the saliency map 21, regarding a smallest unit of the image data 20 or a group of similar units in the image data 20 and estimates the visual attention 22 of the driver. The unit or the group of units, with a higher saliency value is estimated to attract the visual attention 22 of the driver by the visual attention estimator unit 3. The visual attention estimator 3 estimates a direction in which the driver of the vehicle is looking at. The output of the visual attention estimator unit 3, which is an estimated direction of the visual attention 22 of the driver, is then fed into a risk assessment unit 4. The image data 20 is also given to an object detection and classification unit 5. The object detection and classification unit 5 detects different objects in the image data 20. The different objects detected by the object detection and classification unit 5 are for e.g. different vehicles or pedestrians, but is not limited. These detected objects are then given to an object evaluation unit 6, which evaluates if these detected objects could be safety critical to the vehicle. The object evaluation unit 6 evaluates if the detected objects are having a conflicting trajectory of movement with the vehicle. The object evaluation unit 6 evaluates a risk factor (safety criticality) for each detected object. The risk assessment unit 4 receives as input from the object evaluation unit 6, the risk factor for each detected object. The risk assessment unit 4, depending on the risk factor for each detected object and the estimated value of the visual attention 22 of the driver, calculates a risk assessment. The risk assessment gives a quantitative analysis, as to the direction in which the driver of the vehicle is looking at and the location of the object with high risk factor. The risk assessment tells if the driver of the vehicle is looking at the object with high risk factor. If the estimated value of visual attention 22 of the driver does not correspond with the object with high risk factor in the scene the value of risk assessment increases. Conversely, if the estimated value of visual attention 22 of the driver corresponds with the object with high risk factor, the value of risk assessment decreases. The risk assessment unit 4, which calculates the risk assessment, also takes additional inputs obtained from an additional input unit 8. The additional input unit 8 gives additional inputs for e.g., but not limited to, a time of the day at which the vehicle is being driven, internal and external temperature of the passenger compartment, cumulative amount of time for which the vehicle has been driven. The risk assessment unit 4 integrates these additional inputs with the calculated risk assessment and generates an indication signal 23, given as input to a system reaction unit 7 or more specifically driver warning unit. The indication signal 23 defines a level of system reaction that has to be performed by the system reaction unit 7. The indication signal 23 would be an enhanced system reaction for a detected object at which the visual attention of the driver does not correspond with the high risk factor of the detected object. The indication signal 23 would be a weaker system reaction for a detected object at which the visual attention of the driver corresponds with the high risk factor of the detected object. The system reaction from the system reaction unit 7 could be a visual warning, an audio warning, a vibration of a steering wheel, automatic control of the driving condition of the vehicle like activating brakes using an ABS system, activating electronic stability control systems (ESC), could be a milder or a stronger indication, but is not limited to the mentioned few. The system reaction unit 7 may also not give any indication, if the intensity of system reaction defined by indication signal 23 is very low. The system reaction unit 7 can also be a further signal processing unit, for further analysis of the indication signal 23.

Figure 2 explains the saliency map calculation means 2 in detail. The image data 20 from the image capturing sensor 1 is fed into the saliency map calculation means 2. The image data 20 consists at least one image, especially a two dimensional image. The image data 20 is fed into one or more of individual visual feature saliency determination units 201, 202, 210 which are sub-units of the saliency map calculation means 2. These individual visual feature saliency determination units can be for e.g. colour feature saliency determination unit 201 or brightness feature saliency determination unit 202 or contrast feature saliency determination unit 210, but are not limited to the mentioned few. The individual visual feature saliency determination units 201, 201, 210 determine how salient a smallest unit is or a group of units are with respect to a particular image characteristic e.g. colour, depth, contrast, frequency etc, when compared to an adjacent unit. The smallest unit of the image data 20 can be a pixel or a group of pixels in the image data 20. The term saliency itself describes a relative terminology. The individual visual feature saliency determination units 201, 201, 210 generate respective individual feature saliencies of the image data 20. The generated individual visual feature saliencies of the image data 20 are then fed into a saliency integration unit 220, which is also part of the saliency map calculation means 2. The saliency integration unit 220 uses all the visual feature saliencies created by the individual visual feature saliency determination units 201, 202, 210 and it generates a saliency map 21 of the image data 20. The saliency map 21 is derived, by integrating the normalized information from the individual visual feature saliencies obtained from the individual visual feature saliency determination units 201, 202, 210 and combined into one global measure of saliency, by the saliency integration unit 220. The saliency map 21 helps in determining, by how different a smallest unit of an image is from its surroundings, in many sub modalities and at many scales. The saliency map 21 is a topographically arranged map or the two dimensional map, with the saliency encoded at every location in a visual input. The derived saliency map 21 is then fed into the visual attention estimator 3, which then based on the saliency map 21 of the image data 20 estimates the visual attention 22 of the driver of the vehicle to a particular location in the two dimensional image data 20. The visual attention estimator 3 analyses the saliency map 21 in real-time. A winner-take-all neural network in the visual attention estimator 3 then detects the point of highest salience in the saliency map 21 at any given time, and assigns the focus of driver's visual attention 22 towards this location. In order to allow the focus of visual attention 22 to shift to the next most salient target, the currently attended target is transiently inhibited in the saliency map 21. The interplay between winner-take-all and inhibition-of-return ensures that the saliency map 21 is scanned in order of decreasing saliency by the focus of attention, and generates an output in the form of spatial-temporal attention scan paths. Such a model in the visual attention estimator 3 is used, not only to estimate the current gaze direction but also to predict if an object in the image is likely to attract the driver's attention in the near future.

In another embodiment of the invention the computational model of visual attention not only considers saliency information of the image signal but also knowledge about (individual) gaze strategies for the driving task.

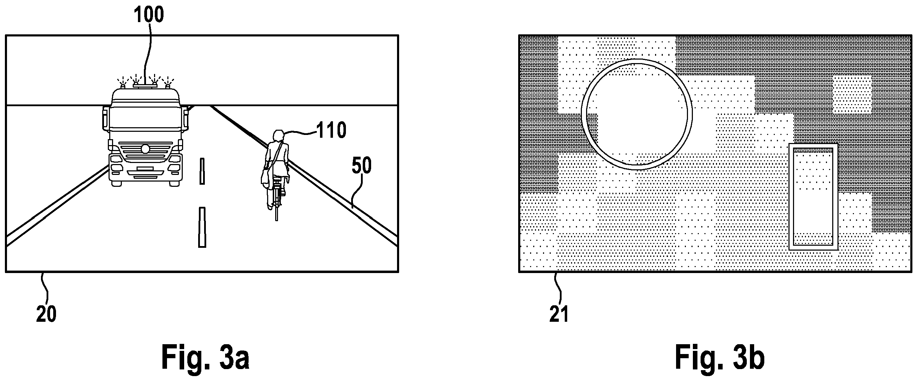

Figure 3 shows an example of the image data 20 and a corresponding saliency map 21 of the image data 20, with regards to the present invention. The image data 20 as shown in figure 3A is that of a forward scene of the vehicle of the present invention and shows a cyclist in dark clothes 110 riding on the right hand side of a road 50 and an oncoming ambulance vehicle 100 travelling on the opposite direction of the road 50. The object detection and classification unit 5 of the present invention detects both the objects, namely the cyclist in dark clothes 110 and the oncoming ambulance vehicle 100. The object evaluation unit 6 of the present invention evaluates a risk factor for both the detected objects and calculates that the cyclist in dark clothes 110 is a safety critical object, because of having a conflicting trajectory of movement with the vehicle of the present invention. This data is given to the risk assessment unit 4 of the present invention. Simultaneously, as shown in figure 3B the saliency calculation means 2 calculates the saliency map 21 of the image data 20. In the figure 3B it can be seen that the saliency of the ambulance (circle) is higher than the saliency of the cyclist in dark clothes (rectangular box). The visual attention estimator 3 gets the saliency map 21 as input, and estimates that the visual attention 22 of the driver of the vehicle of present invention will be towards the ambulance vehicle (circle), which is having a higher saliency than the cyclist in dark clothes (rectangular box). This estimated value of the visual attention 22 of the driver is also given to the risk assessment unit 4. The risk assessment unit 4 integrates both the estimated value of the visual attention 22 and the information on safety critical object 110 obtained from the object evaluation unit 6 and calculates that the estimated visual attention 22 of the driver does not correspond to the safety critical object, which is the cyclist with dark clothes 110 and generates an enhanced system reaction or the indication signal 23 of the present invention. The system reaction unit 7 of the present invention gets the indication signal 23 and generates the necessary system reaction.

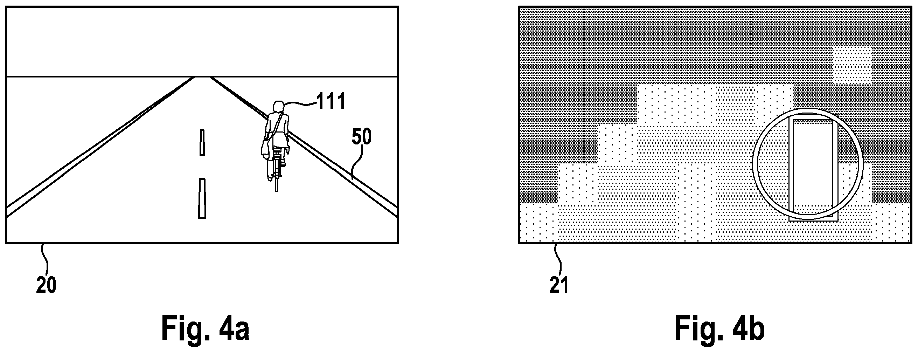

Figure 4 shows another example of the image data 20 of the present invention and the corresponding saliency map 21 of the image data 20. In the image data 20 as represented in figure 4A, which is captured by the image capturing sensor 1 of the vehicle of the present invention, it can be seen that there is only one object, namely a cyclist 111 on the road 50, with a flickering backlight. The saliency map 21 as shown in figure 4B it can be seen that the group of units in the image data 20, corresponding to the cyclist 111 in the image data 20, have a higher saliency (rectangular box) than other units of the image data 20. The visual attention estimator 4 of the present invention also estimates that the visual attention 22 of the driver is towards higher saliency region in the saliency map 21 (circle). Also, the object detection and classification unit 5 and subsequently the object evaluation unit 6, evaluates that the cyclist 111 is the safety critical object. Now, the risk assessment unit 4 integrates both the visual attention 22 of the driver and the location of the safety critical object namely the cyclist 111 in the image data 20 and calculates that the estimated value of visual attention 22 of the driver corresponds to the safety critical object in the image data 20. In this case, the indication signal 23, generated by the risk assessment unit 4, will be a weaker system reaction.

## Claims

1. A driver warning device (500) for a vehicle, comprising an evaluation means, which evaluates a conflicting trajectory of movement of said vehicle with at least one object detected in an image data (20), comprising
- saliency map calculation means (2), calculating a saliency map (21) of said image data (20),
- visual attention estimation means (3), estimating a visual attention (22) of a driver of said vehicle, depending on said calculated saliency map (21) by said saliency map calculation means (2),
- risk assessment means (4), estimating a risk of collision of said vehicle with said at least one object, based on said estimated visual attention (22) of the driver and said evaluated at least one object with conflicting trajectory with said vehicle and
- system reaction means (7), receiving said risk estimation from said risk assessment means (4) and warn the driver of said vehicle,
- said saliency map calculation means (2) calculating the saliency map (21) by measuring and arbitrarily combining several individual visual feature saliencies (201,202, 210) of said image data (20) and measuring several individual visual feature saliencies (201,202, 210) derived from individual image characteristics of said image data (20).
**characterized in that** said visual attention estimation means (3) estimates the visual attention (22) of the driver depending on a comparison of saliencies of each unit of said image data (20) in said saliency map (21).

2. The driver warning device (500) as defined in claim 1, **characterized in** said comparison of saliencies by said visual attention estimation means (3) resulting in an identification of a unit and/or a group of units of said image data (20) with higher saliency than other units of said image data (20).

3. The driver warning device (500) as defined in claim 2, **characterized in** said visual attention estimation means (3) estimating the visual attention (22) of the driver depending on said identified unit and/or a group of units of said image data (20) with higher saliency than other units of said image data (20).

4. The driver warning device (500) as defined in claim 1, **characterized in** said risk assessment means (4) estimating risk of collision of said vehicle with said at least one object, by a comparison of the location of said estimated visual attention (22) of the driver and the location of said evaluated at least one object with conflicting trajectory (6) with said vehicle in the said image data (20).

5. The driver warning device (500) as defined in claim 4, **characterized in** said risk estimation by said risk assessment means (4) resulting in an indication signal (23) to said system reaction means (7).

6. The driver warning device (500) as defined in one of the preceding claims, **characterized in** said system reaction means (7) warning the driver with different intensity depending on said indication signal (23) resulting from said risk assessment means (4).

7. A method to warn a driver of a vehicle, showing a method to evaluate a conflicting trajectory of movement of said vehicle with at least one object detected in an image data (20), comprising the steps of
- calculating a saliency map (21) of said image data (20),
- estimating a visual attention (22) of the driver of said vehicle depending on said calculated saliency map (21),
- estimating a risk of collision of said vehicle with said at least one object detected in said image data (20), based on said estimation of visual attention (22) and said method to evaluate the conflicting trajectory of movement of said vehicle with said at least one object detected in said image data (20),
- warning the driver of said vehicle based on said estimation of the risk of collision,
- calculating the saliency map (21) by measuring and arbitrarily combining several individual visual feature saliencies (201,202, 210) of said image data (20) and measuring several individual visual feature saliencies (201,202, 210) derived from individual image characteristics of said image data (20).
**characterized in** estimating the visual attention (22) of the driver depending on a comparison of saliencies of each unit of said image data (20) in said saliency map (21).

## Patentansprüche

1. Fahrerwarnvorrichtung (500) für ein Fahrzeug, die ein Beurteilungsmittel umfasst, das eine widersprüchliche Bewegungsbahnlinie des Fahrzeugs zu mindestens einem Objekt, das in Bilddaten (20) detektiert wurde, beurteilt, Folgendes umfassend
- ein Salienzkartenberechnungsmittel (2), das eine Salienzkarte (21) der Bilddaten (20) berechnet,
- ein visuelles Aufmerksamkeitsschätzmittel (3), das in Abhängigkeit von der Salienzkarte (21), die vom Salienzkartenberechnungsmittel (2) berechnet wurde, eine visuelle Aufmerksamkeit (22) eines Fahrers des Fahrzeugs schätzt,
- ein Risikoeinschätzungsmittel (4), das auf Basis der geschätzten visuellen Aufmerksamkeit (22) des Fahrers und des beurteilten mindestens einen Objekts mit widersprüchlicher Bahnlinie zum Fahrzeug ein Risiko einer Kollision des Fahrzeugs mit dem mindestens einen Objekt schätzt, und
- ein Systemreaktionsmittel (7), das die Risikoeinschätzung vom Risikoeinschätzungsmittel (4) empfängt und den Fahrer des Fahrzeugs warnt,
- wobei das Salienzkartenberechnungsmittel (2) die Salienzkarte (21) durch Messen und willkürliches Kombinieren von mehreren einzelnen visuellen Merkmalssalienzen (201, 202, 210) der Bilddaten (20) und Messen von mehreren einzelnen visuellen Merkmalssalienzen (201, 202, 210), die von einzelnen Bildeigenschaften der Bilddaten (20) abgeleitet wurden, berechnet,
**dadurch gekennzeichnet, dass** das visuelle Aufmerksamkeitsschätzmittel (3) die visuelle Aufmerksamkeit (22) des Fahrers in Abhängigkeit von einem Vergleich von Salienzen jeder Einheit der Bilddaten (20) in der Salienzkarte (21) schätzt.

2. Fahrerwarnvorrichtung (500) nach Anspruch 1, **dadurch gekennzeichnet, dass** der Vergleich von Salienzen durch das visuelle Aufmerksamkeitsschätzmittel (3) in einer Identifikation einer Einheit und/oder einer Gruppe von Einheiten der Bilddaten (20) mit einer höheren Salienz als andere Einheiten der Bilddaten (20) resultiert.

3. Fahrerwarnvorrichtung (500) nach Anspruch 2, **dadurch gekennzeichnet, dass** das visuelle Aufmerksamkeitsschätzmittel (3) die visuelle Aufmerksamkeit (22) des Fahrers in Abhängigkeit von der identifizierten Einheit und/oder Gruppe von Einheiten der Bilddaten (20) mit einer höheren Salienz als andere Einheiten der Bilddaten (20) schätzt.

4. Fahrerwarnvorrichtung (500) nach Anspruch 1, **dadurch gekennzeichnet, dass** das Risikoeinschätzungsmittel (4), das das Risiko einer Kollision des Fahrzeugs mit dem mindestens einen Objekt durch einen Vergleich des Ortes der geschätzten visuellen Aufmerksamkeit (22) des Fahrers und des Ortes des beurteilten mindestens einen Objekts mit widersprüchlicher Bahnlinie (6) zum Fahrzeug in den Bilddaten (20) einschätzt.

5. Fahrerwarnvorrichtung (500) nach Anspruch 4, **dadurch gekennzeichnet, dass** die Risikoeinschätzung durch das Risikoeinschätzungsmittel (4) in einem Anzeigesignal (23) zum Systemreaktionsmittel (7) resultiert.

6. Fahrerwarnvorrichtung (500) nach einem der vorhergehenden Ansprüche, **dadurch gekennzeichnet, dass** das Systemreaktionsmittel (7) in Abhängigkeit vom Anzeigesignal (23), das aus dem Risikoeinschätzungsmittel (4) resultiert, den Fahrer mit unterschiedlicher Intensität warnt.

7. Verfahren zum Warnen eines Fahrers eines Fahrzeugs, das ein Verfahren zum Beurteilen einer widersprüchlichen Bewegungsbahnlinie des Fahrzeugs zu mindestens einem Objekt, das in Bilddaten (20) detektiert wurde, zeigt und die folgenden Schritte umfasst
- Berechnen einer Salienzkarte (21) der Bilddaten (20),
- Schätzen einer visuellen Aufmerksamkeit (22) des Fahrers des Fahrzeugs in Abhängigkeit von der berechneten Salienzkarte (21),
- Schätzen eines Risikos einer Kollision des Fahrzeugs mit dem mindestens einen Objekt, das in den Bilddaten (20) detektiert wurde, auf Basis der Schätzung einer visuellen Aufmerksamkeit (22) und des Verfahrens zum Beurteilen der widersprüchlichen Bewegungsbahnlinie des Fahrzeugs zum mindestens einen Objekt, das in den Bilddaten (20) detektiert wurde,
- Warnen des Fahrers des Fahrzeugs auf Basis der Schätzung des Risikos einer Kollision,
- Berechnen der Salienzkarte (21) durch Messen und willkürliches Kombinieren von mehreren einzelnen visuellen Merkmalssalienzen (201, 202, 210) der Bilddaten (20) und Messen von mehreren einzelnen visuellen Merkmalssalienzen (201, 202, 210), die von einzelnen Bildeigenschaften der Bilddaten (20) abgeleitet wurden,
**gekennzeichnet durch** Schätzen der visuellen Aufmerksamkeit (22) des Fahrers in Abhängigkeit von einem Vergleich von Salienzen jeder Einheit der Bilddaten (20) in der Salienzkarte (21).

## Revendications

1. Dispositif d'avertissement de conducteur (500) pour un véhicule, comprenant un moyen d'évaluation, qui évalue une trajectoire de mouvement conflictuelle dudit véhicule avec au moins un objet détecté dans des données d'image (20), comprenant
un moyen de calcul de relief (2) calculant une carte de relief (21) desdites données d'image (20),
un moyen d'estimation de l'attention visuelle (3), estimant une attention visuelle (22) d'un conducteur dudit véhicule, en fonction de ladite carte de relief calculée (21) par ledit moyen de calcul de carte de relief (2),
un moyen d'évaluation de risque (4), estimant un risque de collision dudit véhicule avec ledit au moins un objet, sur la base de ladite attention visuelle estimée (22) du conducteur et dudit au moins un objet évalué ayant une trajectoire en conflit avec celle dudit véhicule, et
un moyen de réaction du système (7), recevant ladite estimation de risque dudit moyen d'évaluation de risque (4) et avertissant le conducteur dudit véhicule,
ledit moyen de calcul de carte de relief (2) calculant la carte de relief (21) en mesurant et en combinant arbitrairement plusieurs reliefs d'éléments visuels individuels (201, 202, 210) desdites données d'image (20) et en mesurant plusieurs reliefs d'éléments visuels individuels (201, 202, 210) dérivées des caractéristiques d'images individuelles desdites données d'image (20),
**caractérisé en ce que** ledit moyen d'estimation de l'attention visuelle (3) estime l'attention visuelle (22) du conducteur en fonction d'une comparaison des reliefs de chaque unité desdites données d'image (20) dans ladite carte de relief (21).

2. Dispositif d'avertissement de conducteur (500) tel que défini dans la revendication 1, **caractérisé en ce que** ladite comparaison des reliefs par ledit moyen d'estimation de l'attention visuelle (3) aboutit à une identification d'une unité et/ou d'un groupe d'unités desdites données d'image (20) avec un relief plus important que celui des autres unités desdites données d'image (20).

3. Dispositif d'avertissement de conducteur (500) tel que défini dans la revendication 2, **caractérisé en ce que** ledit moyen d'estimation de l'attention visuelle (3) estime l'attention visuelle (22) du conducteur en fonction de ladite unité identifiée et/ou d'un groupe d'unités desdites données d'image (20) avec un relief plus important que celui des autres unités desdites données d'image (20).

4. Dispositif d'avertissement de conducteur (500) tel que défini dans la revendication 1, **caractérisé en ce que** ledit moyen d'évaluation de risque (4) estime le risque de collision dudit véhicule avec ledit au moins un objet, au moyen d'une comparaison de l'emplacement de ladite attention visuelle estimée (22) du conducteur et de l'emplacement dudit au moins un objet évalué ayant une trajectoire en conflit (6) avec ledit véhicule dans lesdites données image (20).

5. Dispositif d'avertissement de conducteur (500) tel que défini dans la revendication 4, **caractérisé en ce que** ladite estimation du risque par ledit moyen d'évaluation de risque (4) conduit à un signal d'indication (23) transmis audit moyen de réaction du système (7).

6. Dispositif d'avertissement de conducteur (500) tel que défini dans l'une des revendications précédentes, **caractérisé en ce que** ledit moyen de réaction du système (7) avertit le conducteur avec une intensité différente en fonction dudit signal d'indication (23) résultant dudit moyen d'évaluation de risque (4).

7. Procédé pour avertir le conducteur d'un véhicule, présentant un procédé pour évaluer une trajectoire de mouvement conflictuelle dudit véhicule avec au moins un objet détecté dans des données d'image (20), comprenant les étapes suivantes :
calculer une carte de relief (21) desdites données d'image (20),
estimer une attention visuelle (22) du conducteur dudit véhicule en fonction de ladite carte de relief calculée (21),
estimer un risque de collision dudit véhicule avec ledit au moins un objet détecté dans lesdites données d'image (20), sur la base de ladite estimation de l'attention visuelle (22) et dudit procédé pour évaluer la trajectoire de mouvement conflictuelle dudit véhicule avec ledit au moins un objet détecté dans lesdites données d'image (20),
avertir le conducteur dudit véhicule sur la base de ladite estimation du risque de collision,
calculer la carte de relief (21) en mesurant et en combinant arbitrairement plusieurs reliefs d'éléments visuels individuels (201, 202, 210) desdites données d'image (20), et
mesurer plusieurs reliefs d'éléments visuels individuels (201, 202, 210) dérivés des caractéristiques d'images individuelles desdites données d'image (20),
**caractérisé par** l'estimation de l'attention visuelle (22) du conducteur en fonction d'une comparaison des reliefs de chaque unité desdites données d'image (20) dans ladite carte de relief (21).
